# EUROPÄISCHE PATENTANMELDUNG

(11) **EP 0 975 127 A1**
(43) Veröffentlichungstag der Anmeldung: **26.01.2000**
(21) Anmeldenummer: 98113410.9
(22) Anmeldetag: 17.07.1998
(51) Int. Cl.: H04L 29/06, H04Q 3/00

(54) **Verfahren zum Sichern und Restaurieren von Daten einer Telekommunikationsanlage und entsprechende Telekommunikationsanlage**

(71) Anmelder: SIEMENS AKTIENGESELLSCHAFT, 80333 München (DE)
(72) Erfinder: Endres, Rüdiger, 81379 München (DE); Lange, Alfred, 80993 München (DE); Trumpfheller, Thomas, 82110 Germering (DE)

(57) **Zusammenfassung**

Verfahren zum Sichern und Restaurieren von Daten, die Bestandteil eines Anlageprogrammsystems (5, 6a, 7a) einer Telekommunikationsanlage sind, sowie entsprechende Telekommunikationsanlage (1). Vor der Inbetriebnahme der Telekommunikationsanlage (1) wird festgelegt, welche Daten des gesamten Datenbestands (7a) des Anlageprogrammsystems (5, 6a, 7a) tatsächlich für eine Wiederherstellung der Funktionsfähigkeit des Anlageprogrammsystems erforderlich sind, so daß bei einer Sicherung des Anlageprogrammsystems automatisch nur diejenigen Daten auf Datenträger (11) kopiert werden, die zuvor als für die Wiederherstellung des Anlageprogrammsystems (5, 6a, 7a) erforderlich festgelegt worden sind.

## Beschreibung

Die vorliegende Erfindung betrifft ein Verfahren zum Sichern und Restaurieren von Daten einer Telekommunikationsanlage, wobei die Daten insbesondere zur Steuerung der Telekommunikationsanlage verwendet werden, sowie eine entsprechende Telekommunikationsanlage.

In Telekommunikationsanlagen, wie z. B. Vermittlungseinrichtungen, ist es üblich, daß der Betreiber zur Sicherheit in regelmäßigen Abständen, beispielsweise in Abständen von drei Monaten, eine Sicherung (Back-up) der Systemsoftware sowie der entsprechenden Daten durchführt. Des weiteren ist bei jedem Wechsel des sogenannten Anlageprogrammsystems der jeweiligen Telekommunikationsanlage ein Back-up erforderlich. Bei einem derartigen Sicherungsvorgang wird die gesamte Software sowie sämtliche Arbeitsdaten der Telekommunikationsanlage, die beispielsweise einem Knoten eines ATM-Kommunikationsnetzes entsprechen kann, gesichert und auf Datenträger, wie beispielsweise Magnetbänder, ausgelagert.

Eine derartige Komplettsicherung ist sehr aufwendig. Zum einen benötigt die komplette Sicherung der Software und Arbeitsdaten des Anlageprogrammsystems eine sehr lange Zeit, zum anderen ist für die Sicherung eine sehr große Anzahl von Datenträgern erforderlich, so daß beispielsweise die Komplettsicherung eines Netzknotens mehr als sieben Stunden beansprucht und bis zu 16 Bänder benötigt. Entsprechend ist die Restaurierung der gesicherten Software sehr zeitaufwendig und bei einer derartig hohen Anzahl von Sicherungsbändern relativ umständlich, da der Betreiber bei der Restaurierung stets die Reihenfolge der Speicherung beim Einlesen der Bänder einhalten muß. Dies bedeutet jedoch andererseits, daß die Restaurierung gefährdet ist, falls während des Restaurierungsvorgangs bei einem Band ein Lesefehler auftritt, so daß gegebenenfalls mit einem weiteren Sicherungsbandsatz die Restaurierung wider begonnen werden muß. Dies hat zur Folge, daß entweder eine redundante Sicherung durchgeführt werden muß, was zusätzlichen Band- und Zeitbedarf bedeutet, oder aber ein veralteter Stand restauriert wird. Die Wahrscheinlichkeit eines Lesefehlers steigt jedoch mit der Anzahl der für eine Sicherung benötigten Magnetbänder.

Das zuvor beschriebene bekannte Verfahren zum Sichern und Restaurieren von Daten einer Telekommunikationsanlage, bei dem sämtliche Filesysteme der Telekommunikationsanlage, die zur Steuerung der Telekommunikationsanlage dienen, physikalisch 1:1 auf Magnetbänder ausgelagert bzw. von den Magnetbändern wieder eingelesen werden, ist somit mit einem hohen Zeit- und Materialaufwand verbunden und erhöht die Fehleranfälligkeit des Sicherungs- und Restaurierungsverfahrens.

Der vorliegenden Erfindung liegt daher die Aufgabe zugrunde, ein verbessertes Verfahren zum Sichern und Restaurieren von Daten, die zur Steuerung der Telekommunikationsanlage benutzt werden, sowie eine dafür geeignete Telekommunikationsanlage anzugeben, wobei unnötig lange Durchlaufzeiten bei der Sicherung bzw. Restaurierung vermieden werden und der Materialaufwand reduziert wird, um somit auch die Fehleranfälligkeit bei der Sicherung und Restaurierung zu senken.

Diese Aufgabe wird gemäß der vorliegenden Erfindung durch ein Verfahren mit den Merkmalen des Anspruches 1 bzw. eine Telekommunikationsanlage mit den Merkmalen des Anspruches 7 gelöst. Die Unteransprüche beschreiben jeweils vorteilhafte und bevorzugte Ausführungsformen der vorliegenden Erfindung, die u. a. zu einer verbesserten Bedienerfreundlichkeit bei der Sicherung bzw. Restaurierung der Daten beitragen.

Gemäß der vorliegenden Erfindung werden bei der Sicherung nur diejenigen Softwarebestandteile und Arbeitsdaten der Steuerung der Telekommunikationsanlage gesichert, die tatsächlich später zu einer Wiederherstellung des Steuersystems, d. h. des Anlageprogrammsystems, erforderlich sind. Insbesondere wird diesbezüglich vor Inbetriebnahme der Anlage durch das Software-Design festgelegt, welche Daten des gesamten Datenbestands der Steuerung tatsächlich für eine Wiederherstellung des Anlageprogrammsystems erforderlich sind. Vorteilhafterweise werden die Daten bei der Sicherung komprimiert ausgelagert.

Von dem Bedienpersonal oder dem Betreiber der Telekommunikationsanlage wird eine menügesteuerte logische Sicherung (Back-up) und Restaurierung (Restore) des Anlageprogrammsystems durchgeführt, wobei bei der Sicherung der Sicherungsvorgang protokolliert wird, um somit festzuhalten, welche Daten auf welchen Datenträger kopiert worden sind. Bei der Restaurierung kann somit das Bedienpersonal der Telekommunikationsanlage menügesteuert mittels des von der Software verwendeten Zugriffs auf das erstellte Protokoll das jeweils fällige Magnetband zum Einlesen einlegen.

Gemäß einem bevorzugten Ausführungsbeispiel wird das zuvor beschriebene Verfahren weiterhin dahingehend verbessert, daß bei einem Ausfall des Anlageprogrammsystems abhängig von der jeweiligen Ausfallursache wie in der Bedienvorschrift beschrieben das Bedienpersonal die für den jeweiligen Fall günstigste Restaurierungsvariante ausgewählt und durchgeführt wird, so daß abhängig von der Art der fehlenden oder beschädigten Daten des Anlageprogrammsystems das jeweils entsprechende Magnetband, auf dem die entsprechenden Daten zuvor gesichert worden sind, angefordert werden kann.

Die Vorteile der vorliegenden Erfindung liegen in den deutlich kürzeren Durchlaufzeiten und dem geringeren Bedarf von Magnetbändern, so daß für eine Sicherung der Daten der einem ATM-Knoten entsprechenden Telekommunikationsanlage mit Hilfe des erfindungsgemäßen Verfahrens höchstens sechs Magnetbänder benötigt werden und die Sicherung maximal drei Stunden dauert. Die vorliegende Erfindung stellt daher eine Abkehr von dem bei der PC-Software verbreiteten physikalischen Back-up-Restore-Verfahren dar, wobei diese bekannten Verfahren durch einen menügesteuerten logischen und selektiven Vorgang zum Sichern und Restaurieren von Daten ersetzt werden, wodurch Ressourcen (Datenträger) und Zeit eingespart werden können.

Die vorliegende Erfindung ist prinzipiell auf alle Arten von Telekommunikationsanlagen anwendbar, bei denen die Steuerung der Telekommunikationsanlage auf einen bestimmten Datenbestand zugreift oder softwaremäßig erfolgt. Bevorzugt wird die vorliegende Erfindung in Vermittlungsstellen von ATM-Kommunikationsnetzen eingesetzt.

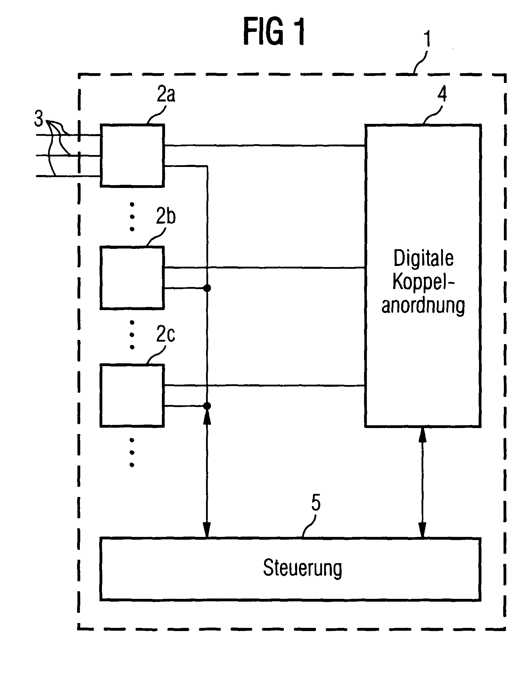

Die vorliegende Erfindung wird nachfolgend anhand eines bevorzugten Ausführungsbeispiels unter Bezugnahme auf die beigefügte Zeichnung näher erläutert.
Dabei zeigt Figur 1 ein vereinfachtes schematisches Blockschaltbild einer Telekommunikationsanlage, bei der die vorliegende Erfindung angewendet wird, und

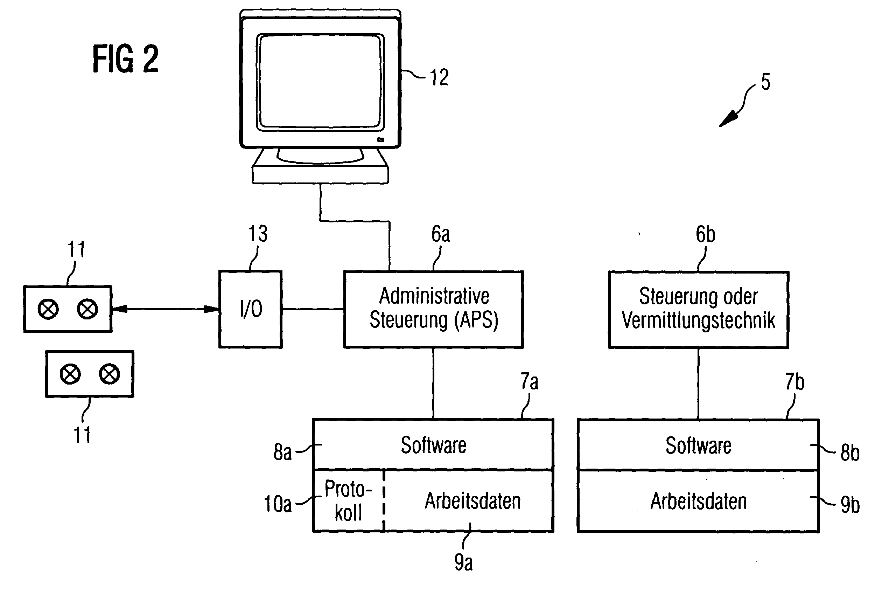

Figur 2 zeigt eine detaillierte Darstellung der Steuerung der in Fig. 1 gezeigten Telekommunikationsanlage.

Die in Figur 1 gezeigte Telekommunikationsanlage 1 dient der Vermittlung von Sprach-, Bild-, Text- und Datenverbindungen zwischen den der Telekommunikationsanlage 1 zugeordneten Teilnehmern. Die Telekommunikationsanlage 1 arbeitet bevorzugt digital, d. h. es findet innerhalb der Telekommunikationsanlage 1 eine digitale Informationsübertragung statt.

Die Telekommunikationsanlage 1 umfaßt als zentrale Bestandteile eine digitale Koppelanordnung (switching network) 4, welche die eigentliche Vermittlungseinrichtung der Telekommunikationsanlage 1 darstellt. Die Koppelanordnung 4 ermöglicht einen sogenannten Raumumstieg von einer an die Telekommunikationsanlage 1 angeschlossenen Übertragungsleitung auf eine andere Übertragungsleitung und einen sogenannten Zeitumstieg von einem Übertragungskanal auf einen anderen Übertragungskanal. Die digitale Koppelanordnung 4 ist in der Regel in einzelne Koppelnetzbausteine oder Koppelstufen aufgeteilt.

Der Telekommunikationsanlage 1 sind unterschiedliche Teilnehmer und Übertragungsleitungen zugeordnet, die über Leitungsanpassungen 2a-2c an die digitale Koppelanordnung 4 herangeführt sind. In den Leitungsanpassungen 2a-2c findet, falls erforderlich, eine Analog/Digital-Umsetzung in kommender Richtung sowie eine Digital/Analog-Umsetzung in gehender Richtung statt. Die Leitungsanpassungen 2a-2c können z. B. über PCM-Übertragungsleitungen, die beispielsweise 64 Kanäle besitzen, mit der digitalen Koppelanordnung 4 verbunden sein. Der Einfachheit halber sind in Figur 1 lediglich für die Leitungsanpassung 2a mehrere Teilnehmerleitungen 3 dargestellt, wobei diese Teilnehmerleitungen sowohl analogen als auch digitalen Teilnehmerendgeräten oder weiteren Netzknoten zugeordnet sein können. Selbstverständlich sind auch die Leitungsanpassungen 2b und 2c jeweils mit einer Vielzahl von Teilnehmerleitungen 3 verbunden.

Die Telekommunikationsanlage 1 ist programmgesteuert. Dies erfolgt mit Hilfe einer Steuerung 5, welche die Verbindungswünsche der Teilnehmer der Telekommunikationsanlage 1 aufnimmt, die Wegeeinstellung (Routing) durchführt und die gesamte Telekommunikationsanlage 1, insbesondere die Hardware der Telekommunikationsanlage, steuert. Die Steuerung 5 ist somit dem sogenannten Anlageprogrammsystem (APS) der Telekommunikationsanlage 1 zugeordnet.

Figur 2 zeigt detailliert den Aufbau der Steuerung 5.

Gemäß dem in Figur 2 gezeigten Beispiel ist die Funktion der Steuerung 5 in zwei Hälften aufgeteilt, die auf zwei getrennten Rechnersystemen 6a bzw. 6b ablaufen. Das eine Rechnersystem 6a beinhaltet das gesamte Anlageprogrammsystem, dient zur administrativen Steuerung der Telekommunikationsanlage 1 und enthält den gesamten. Das Rechnersystem 6a kann insbesondere auch eine Bedienoberfläche zur Kommunikation mit dem Betreiber oder dem Bedienpersonal aufweisen. Das zweite Rechnersystem 6b dient vorwiegend zur Steuerung der eigentlichen Vermittlungstechnik, d. h. insbesondere der digitalen Koppelanordnung 4, der Telekommunikationsanlage 1 und ist zum Ablauf des Systems erforderlich. Die Software des Rechnersystems 6b kann jederzeit aus dem Rechnersystem 6a restauriert werden. Das Rechnersystem 6b ist somit im Gegensatz zu dem erstgenannten Rechnersystem 6a eher hardwareorientiert und unterstützt die vermittlungstechnischen Abläufe. Beide Rechnersysteme 6a bzw. 6b sind zur Sicherheit doppelt vorgesehen, um einen Zusammenbruch der gesamten Telekommunikationsanlage 1 bei Ausfall eines Rechnersystems zu vermeiden.

Beide Rechnersysteme 6a und 6b greifen des weiteren jeweils auf eine Datenbasis 7a bzw. 7b zu, die einerseits die Software 8a bzw. 8b für das jeweilige Rechnersystem und Arbeitsdaten 9a bzw. 9b umfaßt. Damit ist gewährleistet, daß jederzeit ein konsistenter Datenbestand auf den Rechnersystemen 6a/6b vorhanden ist. Insbesondere können stets die Software und die Daten des Rechnersystems 6b durch Herunterladen von dem Rechnersystem 6a restauriert werden. Die Steuerung 5 beinhaltet somit die Datenbasis 7a, die Software 8a, die Arbeitsdaten 9a und das sogenannte Anlageprogrammsystem der Telekommunikationsanlage 1, und es reicht somit aus, in regelmäßigen Abständen eine Sicherung auf Datenträgern 11, beispielsweise Magnetbändern, durchzuführen. Ebenso ist bei jedem Wechsel des Anlageprogrammsystems eine derartige Sicherung erforderlich.

Um die für die Sicherung und Restaurierung benötigte Zeit und die dazu benötigte Anzahl von Magnetbändern 11 zu reduzieren, wird gemäß der vorliegenden Erfindung vorgeschlagen, vor Inbetriebnahme der Telekommunikationsanlage 1 festzulegen, welche Bestandteile des Datenbestands des Anlageprogrammsystems tatsächlich später für eine Wiederherstellung des Anlageprogrammsystems erforderlich sind. Dies kann beispielsweise in Form von Steuerinformationen erfolgen, die zusammen mit den Arbeitsdaten 9a abgelegt sind und auf die der Steuerrechner 6a bei jeder Sicherung zugreift. Insbesondere ist es möglich, diese Festlegung durch das Softwaredesign zu realisieren. Soll nunmehr eine Sicherung des Anlageprogrammsystems (APS) durchgeführt werden, sorgt der zur Steuerung dienende Rechner 6a dafür, daß lediglich die zuvor bestimmten Daten des Datenbestands 7a auf die Magnetbänder 11 kopiert werden, die zuvor als für eine Wiederherstellung des Anlageprogrammsystems unbedingt erforderlich festgelegt worden sind. Auf diese Weise wird sichergestellt, daß lediglich die tatsächlich später für eine Wiederherstellung des Anlageprogrammsystems erforderlichen Softwarebestandteile 8a oder Arbeitsdaten 9a ausgelagert werden, während beispielsweise häufig umfangreiche leere und redundante Datenbereiche nicht auf die Magnetbänder 11 kopiert werden, so daß bei der Sicherung (und entsprechend später bei der Restaurierung) Zeit und Speichermaterial eingespart werden kann.

Der Sicherungsvorgang erfolgt durch Ansteuern eines Magnetbandlaufwerks 13 durch den Rechner 6a, wobei das Magnetbandlaufwerk einerseits zum Kopieren von Daten des Anlageprogrammsystems auf die Magnetbänder 11 und andererseits zum Laden von zuvor aufgezeichneten Daten in die Telekommunikationsanlage 1 dient. Um den für die Sicherung benötigten Speicherbedarf weiter zu reduzieren, können die Daten vor der Sicherung durch den Rechner 6a bzw. das Magnetbandlaufwerk 13 komprimiert und nach der Restaurierung wieder dekomprimiert werden.

Der Rechner 6a protokolliert den Sicherungsvorgang, d. h. es wird im Datenbestand 7a ein Protokoll 10a erstellt, welches insbesondere festhält, welche Daten des Anlageprogrammsystems während des Sicherungsvorgangs auf welchen Datenträger, d. h. auf welches Magnetband 11, kopiert worden sind. Beim Restaurierungsvorgang kann somit der Rechner 6a durch Zugriff auf das Protokoll 10a feststellen, welche Magnetbänder 11 für die Restaurierung des Anlageprogrammsystems benötigt werden und in welcher Reihenfolge diese Magnetbänder 11 gelesen werden müssen, so daß der Rechner 6a beim Restaurierungsvorgang automatisch das jeweils erforderliche Magnetband 11 in der korrekten Reihenfolge zum Einlesen anfordern kann. Die Kommunikation mit dem Betreiber oder dem Bedienpersonal erfolgt dabei über einen Bildschirm 12 des Rechners 6a. Ebenso ist eine akustische Mitteilung denkbar.

Ein besonderer Vorteil der in Figur 2 gezeigten Telekommunikationsanlage 1 besteht darin, daß bei einem Ausfall des Anlageprogrammsystems durch den Rechner 6a die für den jeweiligen Fall günstigste Restaurierungsvariante durchgeführt werden kann, wobei dies insbesondere abgestuft durch die jeweilige Ausfallursache erfolgt. So kann die Bedienperson abhängig davon, welche Daten der Datenbasis 7a des Anlageprogrammsystems fehlen oder beschädigt sind, gemäß der Bedienanweisung festlegen, welche Magnetbänder 11 für die Wiederherstellung dieser fehlenden oder beschädigten Daten erforderlich sind und diese entsprechend einlegen. Es wird geprüft, ob das eingelegte Magnetband mit der erfolgten Auswahl übereinstimmt. Ist somit beispielsweise lediglich ein geringer Umfang der Software 8a oder der Arbeitsdaten 9a beschädigt, kann somit die Restaurierung dieser Datenbereiche in deutlich kürzerer Zeit als bisher erfolgen.

Das zuvor beschriebene Sicherungs- bzw. Restaurierungsverfahren gewährleistet auch ein Restaurieren des Datenbestands 7b, d. h. der Steuersoftware 8b und der Arbeitsdaten 9b, des Rechnersystems 6b.

## Patentansprüche

1. Verfahren zum Sichern und Restaurieren von Daten eines Steuersystems (6a, 7a) einer Telekommunikationsanlage (1), wobei die Daten zur Sicherung von der Telekommunikationsanlage (1) auf mindestens einen Datenträger (11) kopiert und zur Restaurierung von dem Datenträger (11) wieder in die Telekommunikationsanlage (1) geladen werden,
**dadurch gekennzeichnet,**
daß festgelegt wird, welche Daten des gesamten Datenbestands (7a, 7b) des Steuersystems (6a, 7a) tatsächlich für eine Wiederherstellung des Steuersystems (6a, 7a) erforderlich sind, und
daß bei der Sicherung automatisch nur diejenigen Daten des Steuersystems (6a, 7a) auf den Datenträger (11) kopiert werden, die zuvor als für eine Wiederherstellung des Steuersystems (6a, 7a) erforderlich festgelegt worden sind.

2. Verfahren nach Anspruch 1,
**dadurch gekennzeichnet,**
daß die bei der Sicherung auf den Datenträger (11) kopierten Daten Arbeitsdaten (9a, 9b) und Softwarebestandteile (8a, 8b) des Steuersystems (6a, 7a) umfassen.

3. Verfahren nach Anspruch 1 oder 2,
**dadurch gekennzeichnet,**
daß bei der Sicherung die Daten des Datenbestands (7a, 7b) in komprimierter Form auf den Datenträger (11) kopiert und nach der Restaurierung wieder dekomprimiert werden.

4. Verfahren nach einem der vorhergehenden Ansprüche,
**dadurch gekennzeichnet,**
daß bei der Sicherung protokolliert wird, welche Daten auf welchen Datenträger (11) kopiert werden, und
daß bei der Restaurierung automatisch anhand des bei der Sicherung erstellten Protokolls derjenige bzw. diejenigen Datenträger (11) angefordert wird bzw. werden, auf den bzw. auf denen zuvor die zur Wiederherstellung des Steuersystems (6a, 7a) erforderlichen Daten kopiert worden sind.

5. Verfahren nach Anspruch 4,
**dadurch gekennzeichnet,**
daß bei einem Ausfall des Datenbestands (7a, 7b) des Steuersystems (6a, 7a) zur Wiederherstellung des Datenbestands (7a, 7b) anhand einer Bedienvorschrift festgelegt wird, welche Daten des Datenbestands (7a, 7b) des Steuersystems (6a, 7a) zu restaurieren sind, und
daß automatisch anhand des bei der vorhergehenden Sicherung erstellten Protokolls (10a) derjenige bzw. diejenigen Datenträger (11) angefordert wird bzw. angefordert werden, auf den bzw. auf denen zuvor die zu restaurierenden Daten bei einer Sicherung kopiert worden sind.

6. Verfahren nach Anspruch 5,
**dadurch gekennzeichnet,**
daß die Restaurierung protokolliert und anhand des dabei erstellten Protokolls kontrolliert wird.

7. Telekommunikationsanlage (1),
mit Steuermitteln (5, 6a, 6b) zum Steuern der Telekommunikationsanlage (1),
mit Speichermitteln (7a, 7b) zum Speichern von Daten der Steuermittel (5, 6a, 6b),
mit Datenkopiermitteln (10) zum Kopieren von Daten der Steuermittel (5, 6a, 6b) auf mindestens einen Datenträger (10), um diese Daten zu sichern, und
mit Datenlesemitteln (10) zum Laden von auf einem Datenträger (11) gespeicherten Daten in die Telekommunikationsanlage (1), um diese Daten zu restaurieren,
**dadurch gekennzeichnet,**
daß die Speichermittel (7a, 7b) Informationen darüber enthalten, welche Daten der Speichermittel (7a, 7b) tatsächlich für eine Wiederherstellung der Funktionsfähigkeit der Steuermittel (5, 6a, 6b) erforderlich sind, und
daß die Steuermittel (5, 6a, 6b) derart ausgestaltet sind,
daß sie bei einer Sicherung automatisch nur diejenigen Daten der Speichermittel (7a, 7b) auf den mindestens einen Datenträger (11) kopieren, die durch die in den Speichermitteln (7a, 7b) enthaltenen Informationen als für eine Wiederherstellung der Funktionsfähigkeit der Steuermittel (5, 6a, 6b) erforderlich festgelegt sind.

8. Telekommunikationsanlage nach Anspruch 7,
**dadurch gekennzeichnet,**
daß die Informationen darüber, welche Daten der Speichermittel (7a, 7b) tatsächlich für eine Wiederherstellung der Funktionsfähigkeit der Steuermittel (5, 6a, 6b) erforderlich sind, durch die Software der Telekommunikationsanlage festgelegt sind.

9. Telekommunikationsanlage nach Anspruch 7 oder 8,
**dadurch gekennzeichnet,**
daß die Steuermittel (5, 6a, 6b) derart ausgestaltet sind,
daß sie bei der Sicherung von Daten automatisch ein Protokoll (10a) erstellen, welches Informationen darüber enthält, welche Daten der Speichermittel (7a, 7b) auf welchen Datenträger (11) bei einer Sicherung kopiert worden sind, und
daß die Steuermittel (5, 6a, 6b) bei einer Restaurierung automatisch anhand der in dem Protokoll (10a) enthaltenen Informationen denjenigen bzw. diejenigen Datenträger (11) anfordern, auf den bzw. auf die zuvor bei einer Sicherung die zur Wiederherstellung der Funktionsfähigkeit der Steuermittel (5, 6a, 6b) erforderlichen Daten kopiert worden sind.

10. Telekommunikationsanlage nach einem der Ansprüche 7 bis 9,
**dadurch gekennzeichnet,**
daß die in den Speichermitteln (7a, 7b) gespeicherten Daten Arbeitsdaten und Softwarebestandteile der Steuermittel (5, 6a, 6b) umfassen.
